# EUROPEAN PATENT SPECIFICATION

(11) **EP 3 444 458 B1**
(45) Date of publication and mention of the grant of the patent: **18.11.2020**
(21) Application number: 17782220.2
(22) Date of filing: 24.03.2017
(51) Int. Cl.: F01N 3/28, B01D 53/94, B23K 31/00, F01N 13/18

(54) **METHOD FOR MANUFACTURING EXHAUST GAS TREATMENT DEVICE**
VERFAHREN ZUR HERSTELLUNG EINER ABGASBEHANDLUNGSVORRICHTUNG
PROCÉDÉ DE FABRICATION DE DISPOSITIF DE TRAITEMENT DE GAZ D'ÉCHAPPEMENT

(30) Priority: 13.04.2016 JP 2016079938
(43) Date of publication of application: 20.02.2019
(73) Proprietor: Hitachi Zosen Corporation, Osaka-shi, Osaka 559-8559 (JP)
(72) Inventor: TANAKA, Hironaka, Osaka-shi, Osaka 559-8559 (JP); OKAZAKI, Shigeki, Osaka-shi, Osaka 559-8559 (JP); NAKAGUCHI, Harunobu, Osaka-shi, Osaka 559-8559 (JP)
(74) Representative: Grünecker Patent- und Rechtsanwälte PartG mbB
(86) International application number: PCT/JP2017/012099
(87) International publication number: WO 2017/179402

(56) References cited:
- EP-A1- 1 009 924
- WO-A1-2012/168541
- JP-A- H06 269 679
- JP-A- 2003 056 337
- JP-A- 2006 297 442
- JP-A- 2007 217 716
- JP-A- 2010 094 643
- JP-A- 2015 085 230
- JP-A- 2015 085 230
- US-A1- 2009 065 296

## Description

### Technical Field

The present invention relates to a method for manufacturing an exhaust gas treatment device, and an exhaust gas treatment device provided with a catalyst unit for treating exhaust gas emitted from ships or the like.

### Background Art

A typical exhaust gas treatment device (e.g., Patent Literature 1) includes a vessel body where exhaust gas flows, a catalyst supporting mechanism provided in the vessel body, and a cap welded to the vessel body with an exhaust-gas passage hole formed on the cap. The catalyst supporting mechanism can support the catalyst unit and is welded to the inside of the vessel body in order to seal a passage where a catalyst should not flow, so that exhaust gas always passes through the catalyst. In this configuration, the vessel body and the cap are made of, for example, chromium molybdenum steel. Chromium molybdenum steel requires annealing for removing an internal stress generated during forming or welding. US 2009/0065296 A1 relates to a fixing device of a catalyst substrate.

### Citation List

### Patent Literature

Patent Literature 1: Japanese Patent No. 5295403

### Summary of Invention

### Technical Problem

Such an exhaust gas treatment device according to the related art is manufactured as follows: the catalyst supporting mechanism being formed in the vessel body is sequentially welded to the inside of the vessel body, the cap is welded to the vessel body, and then the exhaust gas treatment device is entirely annealed. In this manufacturing method, however, the effect of annealing may deform the catalyst supporting mechanism so as to disadvantageously deteriorate the gas sealing performance of the catalyst support mechanism.

An object of the present invention is to improve the gas sealing performance of a catalyst supporting mechanism constituting an exhaust gas treatment device.

### Solution to Problem

A method for manufacturing an exhaust gas treatment device according to the present invention is defined in claim 1.

### Advantageous Effects of Invention

According to the method for manufacturing a gas treatment device of the present invention, the vessel body containing the welding member and the cap are annealed in advance, the welded between the vessel body and the cap are annealed partially after the vessel body and the cap are welded together. In the welding of the catalyst supporting mechanism, the welding member and the catalyst supporting mechanism are welded together. Thus, the catalyst supporting mechanism is not affected by annealing, thereby preventing the catalyst supporting mechanism from being deformed by annealing. This can improve the gas sealing performance of the catalyst supporting mechanism as compared with the method for manufacturing an exhaust gas treatment device according to the related art in which the exhaust gas treatment device including the catalyst supporting mechanism is entirely annealed.

### Brief Description of Drawings

[FIG. 1A] FIG. 1A is a side cross-sectional view showing an exhaust gas treatment device according to an embodiment of the present invention.
[FIG. 1B] FIG. 1B is a side cross-sectional view showing a buttering bead of the exhaust gas treatment device.
[FIG. 1C] FIG. 1C is a side cross-sectional view showing a doubling plate of the exhaust gas treatment device.
[FIG. 2] FIG. 2 is a plan view showing a catalyst unit according to the embodiment of the present invention.
[FIG. 3] FIG. 3 is an exploded side view showing a tubular case of the catalyst unit according to the embodiment of the present invention.
[FIG. 4] FIG. 4 is a cross-sectional plan view showing the exhaust gas treatment device according to the embodiment of the present invention corresponding to a cross-sectional view taken along line V1-V1 in FIG. 1A.
[FIG. 5] FIG. 5 is a cross-sectional plan view showing the exhaust gas treatment device corresponding to a cross-sectional view taken along line V2-V2 in FIG. 1A.
[FIG. 6] FIG. 6 is a cross-sectional plan view showing the exhaust gas treatment device corresponding to a cross-sectional view taken along line V3-V3 in FIG. 1A.
[FIG. 7] FIG. 7 is a side enlarged view showing an angle member of the exhaust gas treatment device.
[FIG. 8A] FIG. 8A is a side view showing a second column member of the exhaust gas treatment device.
[FIG. 8B] FIG. 8B is a front view showing the second column member of the exhaust gas treatment device.
[FIG. 9A] FIG. 9A is a side view showing another second column member of the exhaust gas treatment device.
[FIG. 9B] FIG. 9B is a front view showing another second column member of the exhaust gas treatment device.
[FIG. 9C] FIG. 9C is a plan view showing another second column member of the exhaust gas treatment device.
[FIG. 10] FIG. 10 is a cross-sectional plan view showing the exhaust gas treatment device corresponding to a cross-sectional view taken along line V4-V4 in FIG. 1A.
[FIG. 11] FIG. 11 is a cross-sectional plan view showing the exhaust gas treatment device corresponding to a cross-sectional view taken along line V5-V5 in FIG. 1A.
[FIG. 12A] FIG. 12A shows a method for manufacturing the exhaust gas treatment device.
[FIG. 12B] FIG. 12B shows the method for manufacturing the exhaust gas treatment device.
[FIG. 12C] FIG. 12C shows the method for manufacturing the exhaust gas treatment device.
[FIG. 12D] FIG. 12D shows the method for manufacturing the exhaust gas treatment device.
[FIG. 12E] FIG. 12E shows the method for manufacturing the exhaust gas treatment device.
[FIG. 12F] FIG. 12F shows the method for manufacturing the exhaust gas treatment device.
[FIG. 12G] FIG. 12G shows the method for manufacturing the exhaust gas treatment device.
[FIG. 12H] FIG. 12H shows the method for manufacturing the exhaust gas treatment device.
[FIG. 12I] FIG. 12I shows the method for manufacturing the exhaust gas treatment device.
[FIG. 12J] FIG. 12J shows the method for manufacturing the exhaust gas treatment device.
[FIG. 12K] FIG. 12K shows the method for manufacturing the exhaust gas treatment device.
[FIG. 12L] FIG. 12L shows the method for manufacturing the exhaust gas treatment device.

### Description of Embodiments

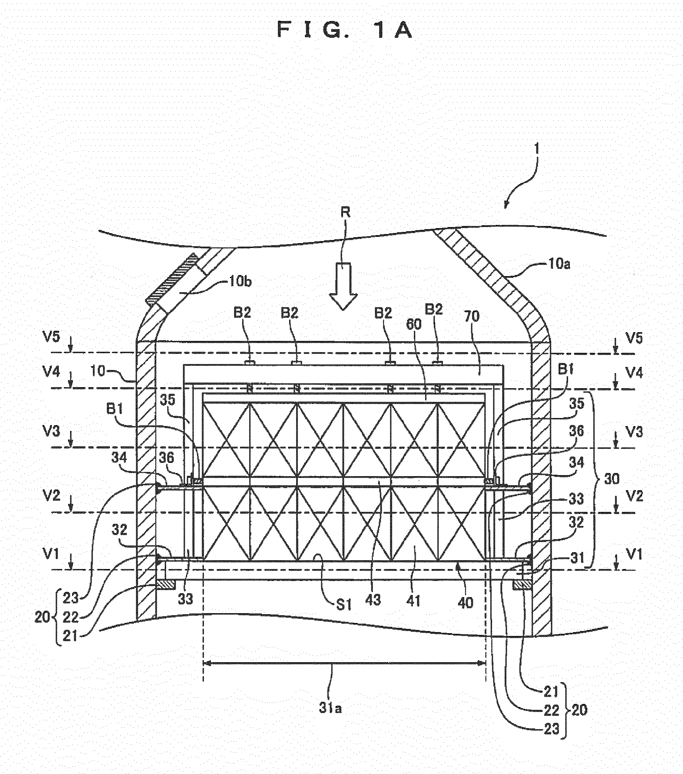

Referring to FIGS. 1A to 11, the configuration of an exhaust gas treatment device which is to be manufactured according to an embodiment of the present invention will be at first described below. As shown in FIG. 1A, an exhaust gas treatment device 1 includes a vessel body 10 in which exhaust gas flows, a welding member 20 attached to the inside of the vessel body 10, a catalyst supporting mechanism 30 held in the vessel body 10 by the welding member 20, a catalyst unit 40 supported by the catalyst supporting mechanism 30, a second grid 60 provided on the catalyst unit 40, and a grid retainer 70 that fixes the second grid 60. Reference character R in FIG. 1A denotes a gas passage for a flow of exhaust gas.

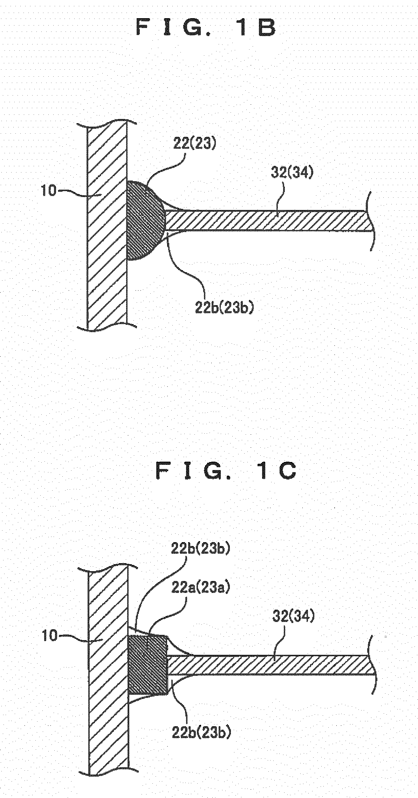

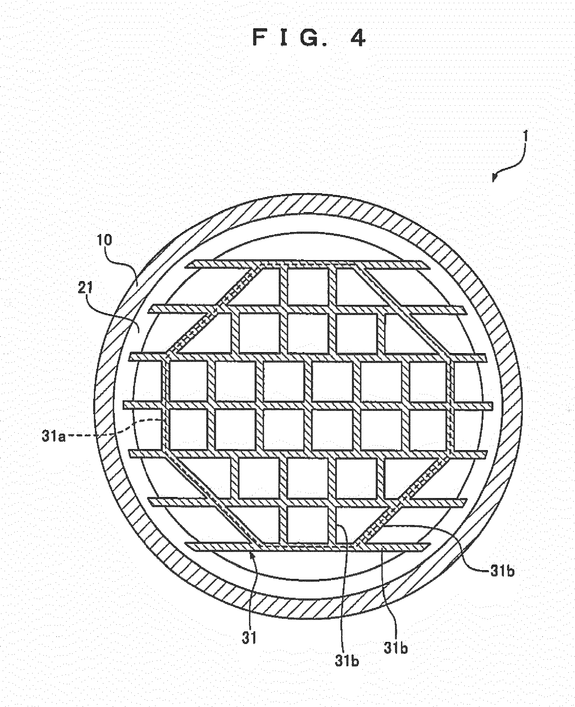

As shown in FIGS. 1A and 4, the vessel body 10 is, for example, cylindrical in shape and contains the welding member 20. The vessel body 10 is made of a material, e.g., chromium molybdenum steel that requires annealing for removing an internal stress generated during forming or welding. The vessel body 10 may be made of half molybdenum. In the case of half molybdenum, annealing is necessary for a thickness of at least 16 mm. The welding member 20 includes a ring 21 and buttering beads 22 and 23 (see FIG. 1B) that are circumferentially welded to the interior of the vessel body 10. The ring 21 and the buttering beads 22 and 23 are made of materials that do not require annealing even after forming or welding. The ring 21 is made of metals and the buttering beads 22 and 23 are made of ordinary welding materials. The buttering beads 22 and 23 may be replaced with, as shown in FIG. 1C, doubling plates 22a and 23a serving as welded members that do not require annealing. The doubling plates 22a and 23a are made of, for example, carbon steel having a thickness of about 6 mm. Annealing is not necessary if the thickness of carbon steel is not larger than 30 mm. The upper part of the vessel body 10 is provided with a cap 10a that has the same diameter as the vessel body 10 at the lower end of the cap 10a and tapers toward the upstream side. The cap 10a is made of, for example, chromium molybdenum steel like the vessel body 10. Moreover, the cap 10a is provided with a manhole 10b which is openable and closable.

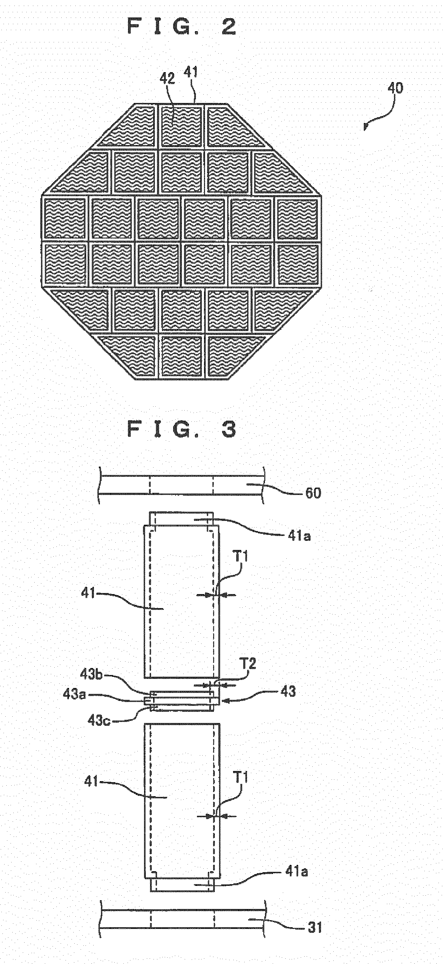

As shown in FIGS. 2 and 3, the catalyst unit 40 includes a plurality of tubular cases 41 shaped like square poles and a catalyst 42 contained in the tubular cases 41. The catalyst 42 for denitration contains a reducer, e.g., ammonia that reacts with NOx emitted from ships or the like. The catalyst 42 has a corrugated structure including a plurality of parallel plates and corrugated plates provided between the parallel plates in horizontal cross section. The tubular case 41 has a projecting portion 41a that is fit into a first grid 31 or a second grid 60 as shown in FIG. 3. The tubular cases 41 are disposed between the first grid 31 and the second grid 60 and are vertically stacked via an attachment 43, forming a two-stage configuration.

As shown in FIG. 3, the attachment 43 includes a body 43a having the same external dimension as the tubular case 41 and two projecting portions 43b and 43c smaller than the external dimension. The projecting portion 43b projects upward from the body 43a, whereas the projecting portion 43c projects downward from the body 43a. The projecting portions 43b and 43c are engaged with the inside of the tubular case 41. Thus, the tubular case 41 has a two-stage configuration with the attachment 43 interposed between the tubular cases 41. The attachment 43 is not filled with the catalyst 42. The tubular case 41 has a tubular thickness T1 smaller than a tubular thickness T2 of the body 43a of the attachment 43. This configuration reduces the weight of the tubular case 41 to be filled with the catalyst 42, facilitating handling of the tubular case 41 so that the tubular case 41 is easily moved by man power to be placed into the catalyst supporting mechanism 30.

As shown in FIG. 1A, the catalyst supporting mechanism 30 supports the catalyst unit 40 in the vessel body 10 and seals a passage where exhaust gas does not flow the catalyst, so that exhaust gas always passes through the catalyst. The catalyst supporting mechanism 30 is made of, for example, carbon steel. The catalyst supporting mechanism 30 includes the first grid 31, a first seal plate 32, a plurality of first column members 33, a second seal plate 34, a plurality of second column members 35, and angle members 36.

As shown in FIG. 1A, the first grid 31 is laterally provided at the bottom of the vessel body 10 and has a major surface S1 on the top of the first grid 31. A placement area 31a, in which the catalyst unit 40 can be placed, is formed in a central part of the major surface S1. Specifically, as shown in FIG. 4, the first grid 31 includes a plurality of bars 31b that are longitudinally, laterally, and diagonally combined in a grid-like fashion. The bars 31b form the placement area 31a. Some of the bars 31b extend out of the placement area 31a. The ends of the bars 31b extending out of the placement area 31a are welded onto the ring 21 provided in the vessel body 10.

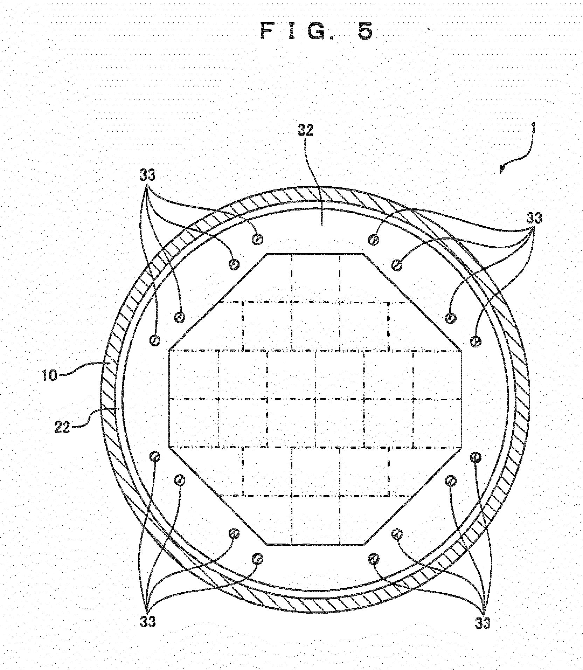

As shown in FIGS. 1A and 5, the first seal plate 32 is a circular plate, from which the same flat shape as the placement area 31a is cut, is placed on the first grid 31 inside a circumference of the vessel body 10. The outside diameter of the first seal plate 32 is substantially equal to the inside diameter of the vessel body 10 and the first seal plate 32 extends out of the major surface S1 of the first grid 31. The outer circumference of the first seal plate 32 is welded to a buttering bead 22. Reference numeral 22b in FIG. 1B denotes the welded portion of the first seal plate 32. The welded portions 22b are also provided for the doubling plate 22a used instead of the buttering bead 22 as shown in FIG. 1C. As described above, the first seal plate 32 is laid outside the placement area 31a of the first grid 31 on the major surface S1. The first seal plate 32 in this state is welded to the first grid 31.

As shown in FIG. 1A, the first column members 33 are raised on the first seal plate 32 with the bottoms welded to the first seal plate 32. As shown in FIGS. 1A and 5, the first column members 33 are, for example, rod members that are circular in cross section and are dispersed along the inner circumference of the vessel body 10. As shown in FIG. 1A, the second seal plate 34 is laid on the upper ends of the first cylinders 33. The second seal plate 34 in this state is welded to the first cylinders 33. In order to prevent the inclination of the first column members 33, recessed portions having shapes identical to the first cylinders 33 in cross section may be formed on the first seal plate 32 and the second seal plate 34 and then the first column members 33 may be fit into the recessed portions.

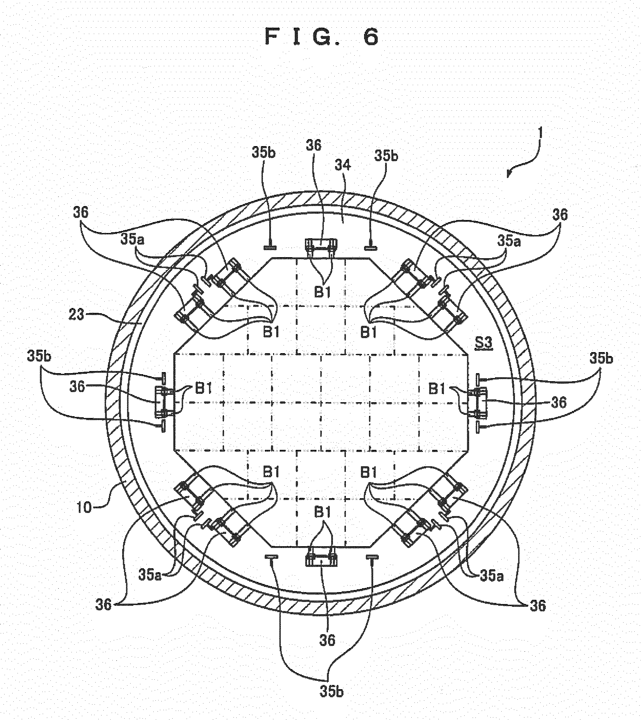

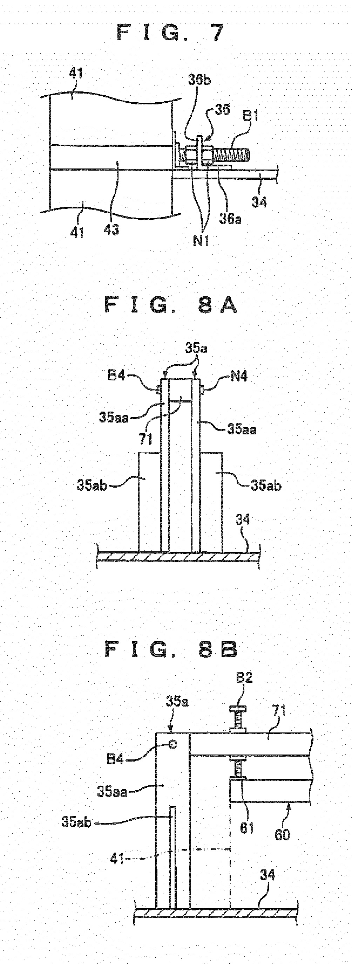

As shown in FIGS. 1A and 6, the second seal plate 34 has the same shape as the first seal plate 32. The outer circumference of the second seal plate 34 is also welded to the buttering bead 23. As shown in FIGS. 6 and 7, the angle members 36 are fixed onto the second seal plate 34. The angle members 36 each include a bottom plate 36a and a side plate 36b. The bottom plate 36a is welded to the second seal plate 34. The side plate 36b is formed perpendicularly to the bottom plate 36a and has a through hole for a horizontal bolt B1. The bolt B1 and nuts N1 are fastened so as to press the attachment 43 with the bolt B1 from an outer circumferential side. Thus, the attachment 43 of the catalyst unit 40 can be pressed from the outer circumferential side of the catalyst unit 40 via the angle member 36. This fixes the catalyst unit 40 in a transverse direction. The transverse direction means a direction perpendicular to the longitudinal direction of stacking the configurations of the catalyst supporting mechanism 30.

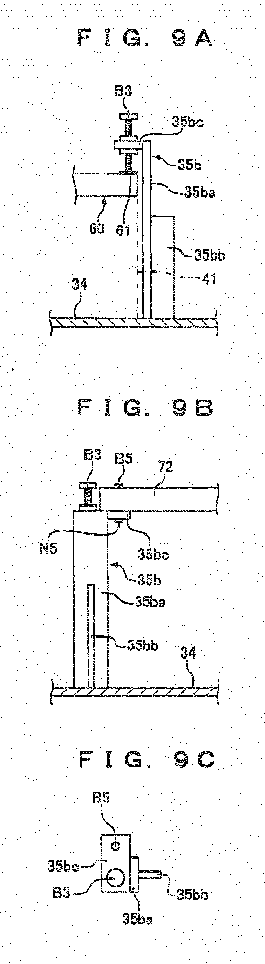

As shown in FIG. 1A, the second column members 35 are raised on the second seal plate 34 with the bottoms welded to the second seal plate 34. As shown in FIG. 6, the second column members 35 include second column members 35a and second column members 35b. As shown in FIGS. 8A and 8B, the second column member 35a includes a plate body 35aa and a plate support 35ab. In order to prevent the inclination of the body 35aa, the support 35ab is mounted perpendicularly to the body 35aa. As shown in FIGS. 9A, 9B, and 9C, a plate support 35bb is mounted perpendicularly to a plate body 35ba. On the upper end of the body 35ba of the second column member 35b, a plate 35bc is mounted in the horizontal direction perpendicular to the upper end of the body 35ba.

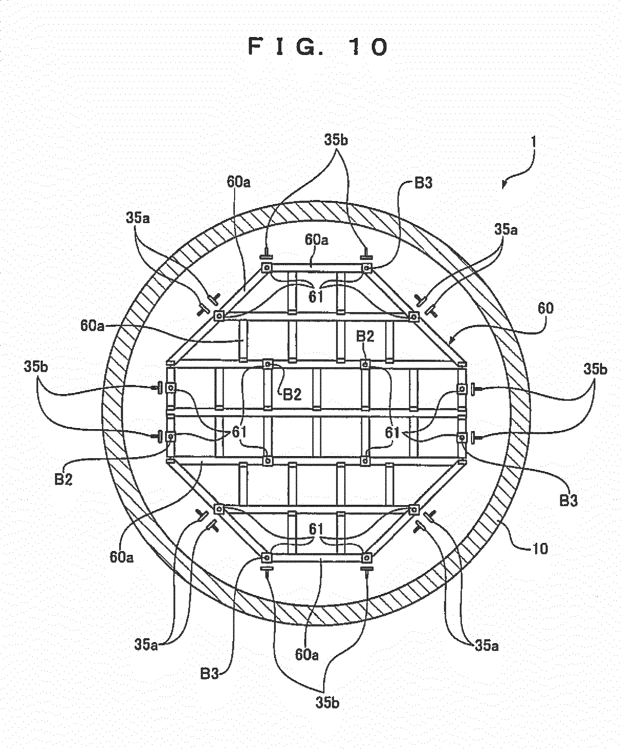

As shown in FIG. 1A, the second grid 60 is provided on the catalyst unit 40. As shown in FIG. 10, the second grid 60 includes a plurality of bars 60a that are longitudinally, laterally, and diagonally combined in a grid-like fashion. The second grid 60 further includes a plurality of horizontal plates 61 that are provided on the bars 60a or the intersections of the bars 60a.

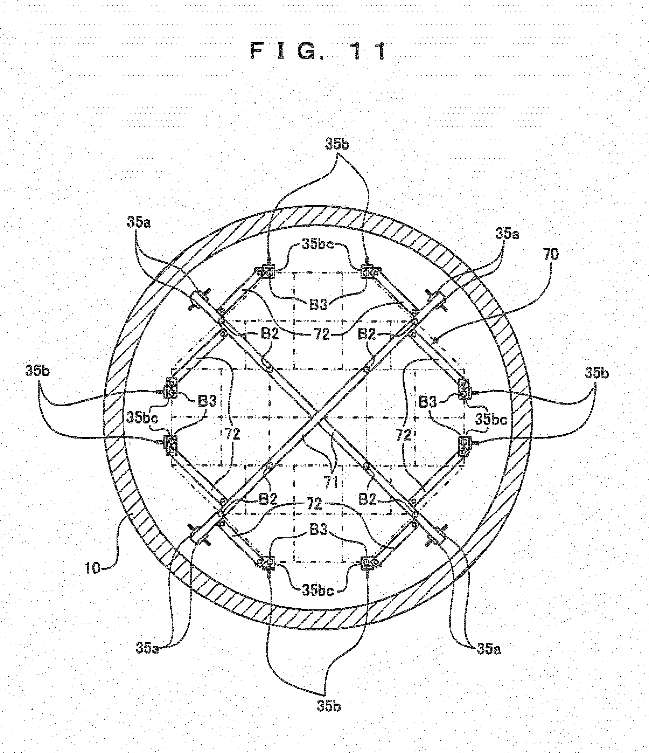

As shown in FIG. 1A, the grid retainer 70 is further provided on the second grid 60. The grid retainer 70 includes, as shown in FIG. 11, two main bars 71 crossing each other at right angles at the center of the vessel body 10, and branches 72 from the two main bars 71. The main bar 71 is supported with one end and the other end held by the pair of second column bodies 35a. Specifically, as shown in FIGS. 8A and 8B, one end of the main bar 71 and the bodies 35aa of the pair of second column bodies 35a are fastened with a bolt B4 and a nut N4. The branch 72 has one end supported by the second column body 35b. Specifically, as shown in FIGS. 9A, 9B, and 9C, one end of the branch 72 is nearly placed on the horizontal plate 35bc of the second column member 35b, and the branch 72 and the plate 35bc are fastened with a bolt B5 and a nut N5. Thus, the grid retainer 70 is fixed by the second column members 35a and 35b.

The main bars 71 of the grid retainer 70 are each provided with a plurality of vertical female threads. The plate 61 of the second grid 60 in FIGS. 8B and 10 is pressed from above by bolt B2 through the female threads. Furthermore, the plate 35bc of the second column member 35b is also provided with vertical female threads. The plate 61 of the second grid 60 in FIGS. 9A and 10 is pressed from above by bolt B3 through the female threads. This fixes the catalyst unit 40 in a vertical direction. The second grid 60 and the grid retainer 70 are not welded to the vessel body 10 or the catalyst supporting mechanism 30. This is because the used catalyst unit 40 needs to be removable from the catalyst supporting mechanism 30 so as to be replaced with a new catalyst unit 40.

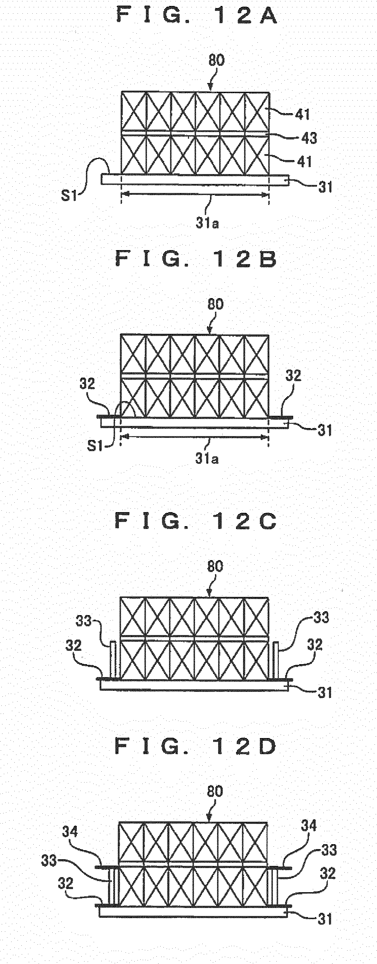

Referring to FIGS. 12A to 12L, a method for manufacturing an exhaust gas treatment device 1 according to the present embodiment will be described below. The method for manufacturing the exhaust gas treatment device 1 according to the present embodiment includes the steps of: forming the catalyst supporting mechanism 30 outside the vessel body 10; assembling the catalyst supporting mechanism 30 into the annealed vessel body 10; welding the ring 21 and the buttering beads 22 and 23 to the catalyst supporting mechanism 30; and welding the annealed cap 10a and the vessel body 10 together and annealing partially the welded between the cap 10a and the vessel body 10.

### (Step of forming the catalyst supporting mechanism)

The step of forming the catalyst supporting mechanism 30 outside the vessel body 10 will be described below. As shown in FIG. 12A, a dummy catalyst 80 is placed on the placement area 31a of the first grid 31. The dummy catalyst 80 is provided to position the first seal plate 32, the first cylinders 33, the second seal plate 34, and the second column members 35 with respect to the first grid 31. The dummy catalyst 80 has the shape as the catalyst unit 40 of FIG. 2 and includes the tubular cases 41 vertically stacked in two stages via the attachment 43. The dummy catalyst 80 is different from the catalyst unit 40 in that the tubular cases 41 are not filled with the catalyst.

After the dummy catalyst 80 is placed on the placement area 31a of the first grid 31, as shown in FIG. 12B, the first seal plate 32 is laid on the major surface S1 of the first grid 31. The first seal plate 32 may be laid before the dummy catalyst 80 is placed on the placement area 31a. After the first seal plate 32 is placed on the major surface S1 of the first grid 31, the first grid 31 and the first seal plate 32 are welded together.

As shown in FIG. 12C, the first column members 33 are raised on the first seal plate 32, and then the first seal plate 32 and the first column members 33 are welded. At this point, the first column members 33 are disposed around the dummy catalyst 80.

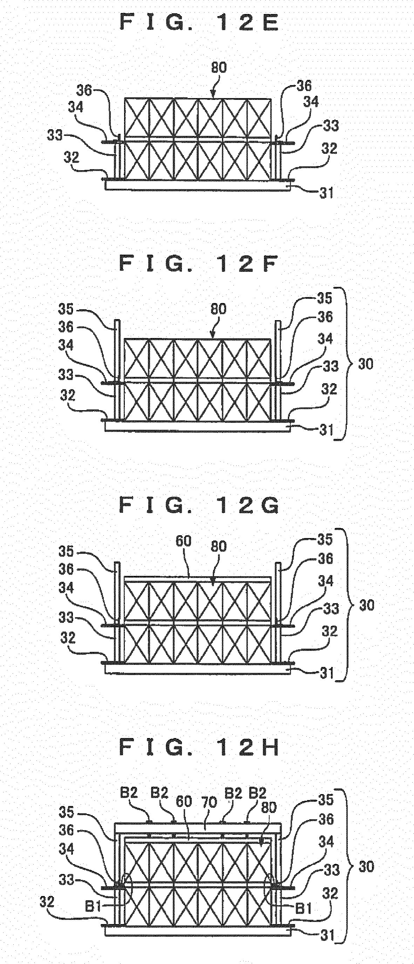

Thereafter, as shown in FIG. 12D, the second seal plate 34 is laid on the first column members 33, and then the first column members 33 and the second seal plate 34 are welded together. As shown in FIG. 12E, the angle members 36 are mounted on the second seal plate 34. The angle members 36 may be mounted on the second seal plate 34 in advance when the second seal plate 34 is laid on the first column members 33.

As shown in FIG. 12F, the second column members 35 are raised on the second seal plate 34, and then the second seal plate 34 and the second column members 35 are welded together. The catalyst supporting mechanism 30 is completed thus. Then, as shown in FIG. 12G, the second grid 60 is placed on the dummy catalyst 80. Finally, as shown in FIG. 12H, the grid retainer 70 is attached to the second column members 35 with the bolts B4 and B5 (see FIGS. 8A and 9B), the dummy catalyst 80 is fixed in the transverse direction while being pressed from the outer circumferential side with the bolts B1, and then the dummy catalyst 80 is vertically fixed while being pressed from above with the bolts B2 and B3 (see FIG. 11). The steps in FIGS. 12G and 12H are performed simply to check whether the catalyst unit is properly fixed or not with the dummy catalyst 80 fixed instead of the catalyst unit. However, these steps are not always necessary. After the catalyst supporting mechanism 30 is completed, the second grid 60 and the grid retainer 70 are removed and then the dummy catalyst 80 is removed from above.

### (Step of assembling the catalyst supporting mechanism)

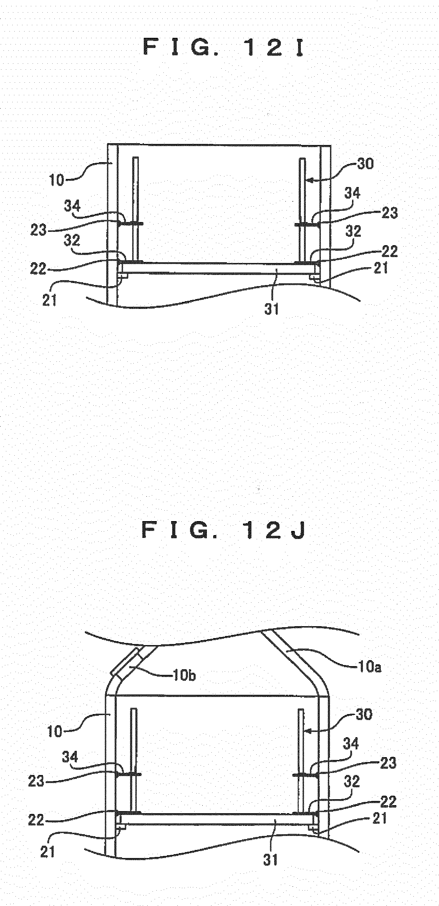

The step of assembling the catalyst supporting mechanism 30 into the annealed vessel body 10 will be described below in the absence of the cap 10a. Specifically, as shown in FIG. 12I, the catalyst supporting mechanism 30 is mounted on the ring 21 provided inside the vessel body 10 having an opening on the upper end. In this case, the vessel body 10 has been already annealed with the ring 21 and the buttering beads 22 and 23 welded inside the vessel body 10.

### (Step of welding the catalyst supporting mechanism)

Thereafter, the catalyst supporting mechanism 30 is placed into the vessel body 10, the first grid 31 and the ring 21 are welded together, and then the first seal plate 32 and the second seal plate 34 of the catalyst supporting mechanism 30 and the buttering beads 22 and 23 are welded together. The catalyst supporting mechanism 30, the ring 21, and the buttering beads 22 and 23 are made of materials that do not require annealing as described above, so that annealing is not necessary after the welding step.

### (Step of welding and partial annealing of the vessel body and the cap)

As shown in FIG. 12J, the cap 10a is welded to the vessel body 10. The cap 10a to be used has been already annealed. This eliminates the need for annealing over the cap 10a. However, annealing is necessary at the welded points of the cap 10a and the vessel body 10 and thus annealing is locally performed on the welded portions. Specifically, a partial annealing method includes locally heating the welded portionts wrapped with, for example, an electric heater. The annealing temperature of chromium molybdenum steel is about 500°C.

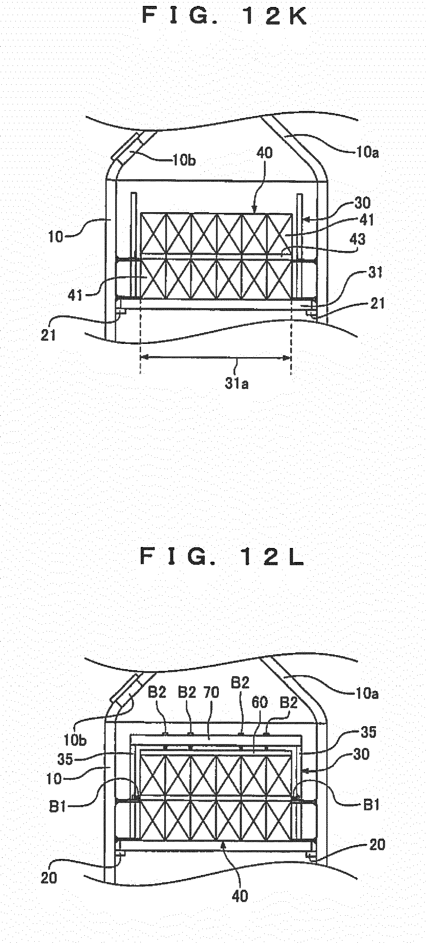

Thereafter, as shown in FIG. 12K, the catalyst unit 40 is placed on the placement area 31a of the first grid 31. The catalyst unit 40 is placed such that the tubular cases 41 constituting the catalyst unit 40 are each carried into the vessel body 10 from the manhole 10b and are fit into the first grid 31 as shown in FIG. 3 so as to complete the first stage, the attachment 43 is stacked on the tubular cases 41, and then the tubular cases 41 of the second stage are stacked on the attachment 43.

Finally, as shown in FIG. 12L, the second grid 60 is disposed on the catalyst unit 40, the grid retainer 70 is mounted on the second cylinders 35, and then the catalyst unit 40 is fixed in the longitudinal and lateral directions. A specific method of mounting the grid retainer 70 on the second cylinders 35 and a specific method of fixing the catalyst unit 40 in the longitudinal and lateral directions are similar to those illustrated in FIGS. 12G and 12H and thus the explanation thereof is omitted.

In the method of manufacturing the exhaust gas treatment device 1 according to the embodiment of the present invention, the vessel body 10 containing the welded members (the ring 21, the buttering beads 22 and 23) and the cap 10a are annealed in advance, the vessel body 10 and the cap 10a are welded together, and then the welded between the vessel body 10 and the cap 10a are partially annealed. In the welding of the catalyst supporting mechanism 30, the welding members and the catalyst supporting mechanism 30 are welded together. Thus, the catalyst supporting mechanism 30 is not affected by annealing, thereby preventing the catalyst supporting mechanism 30 from being deformed by annealing. This can improve the gas sealing performance of the catalyst supporting mechanism 30 as compared with the method for manufacturing an exhaust gas treatment device according to the related art in which the exhaust gas treatment device 1 including the catalyst supporting mechanism 30 is entirely annealed.

In the manufacturing method of the present embodiment, the catalyst supporting mechanism 30 is completed by welding the first grid 31, the first seal plate 32, the first column members 33, the second seal plate 34, and the second column members 35 outside the vessel body 10. This can improve the working environment and the manufacturing accuracy of the catalyst supporting mechanism 30 as compared with the related art in which the catalyst supporting mechanism 30 is completed in the vessel body 10. Thus, the catalyst supporting mechanism 30 can support the catalyst unit 40 without forming any gaps, thereby improving the gas sealing performance of the exhaust gas treatment device 1.

In the method for manufacturing the exhaust gas treatment device 1 according to the present embodiment, the dummy catalyst 80 is used in the step of forming the catalyst supporting mechanism 30. The present invention is not limited to the use of the dummy catalyst 80. The catalyst unit 40 may be used for positioning instead of the dummy catalyst 80 or the catalyst supporting mechanism 30 may be formed without positioning. However, the catalyst supporting mechanism 30 is formed by positioning with the dummy catalyst 80 or the catalyst unit 40, thereby improving the manufacturing accuracy of the catalyst supporting mechanism 30.

Moreover, in the exhaust gas treatment device 1 according to the present embodiment, the catalyst unit 40 includes the tubular cases 41 disposed in two stages. The present invention is not limited to this configuration. For example, the catalyst unit 40 may have a single stage or three or more stages. If the catalyst unit 40 has multiple stages, it is preferable that the seal plates and the cylinders are alternately disposed as many as the number of stages of the catalyst unit 40 and the attachment 43 is provided between the tubular cases 41 so as to be pressed from the outer circumferential side. The number of seal plates does not always need to be equal to the number of stages of the catalyst unit 40 as long as at least one seal plate is provided.

Moreover, in the exhaust gas treatment device 1 according to the present embodiment, the catalyst unit 40 is pressed and fixed with the bolts B1, B2, and B3. The present invention is not limited to this configuration. The catalyst unit 40 can be fixed in the lateral direction also by disposing an urging member, e.g., a spring between the angle member 36 and the attachment 43. Similarly, the catalyst unit 40 can be vertically fixed by disposing an urging member between the grid retainer 70 and the second grid 60.

FIG. 1A and the like show what is called a longitudinal exhaust gas treatment device, in which a gas passage R for exhaust gas extends in the vertical direction. Obviously, the present invention is not limited to this configuration. In other words, the present invention includes an exhaust gas treatment device in a lateral position, for example, the exhaust gas treatment device 1 is laid with the gas passage R extending in the horizontal direction.

Moreover, the exhaust gas treatment device 1 according to the present embodiment is used for treating exhaust gas from ships. The present invention is not limited to this purpose. The present invention is applicable to transportation equipment or facilities that require exhaust gas treatment.

## Claims

1. A method for manufacturing an exhaust gas treatment device comprises:
forming a catalyst supporting mechanism (30) outside a vessel body (10) where exhaust gas flows, the catalyst supporting mechanism (30) supporting a catalyst unit (40) for treating exhaust gas;
assembling the catalyst supporting mechanism (30) into the annealed vessel body (10) containing a welding member (21, 22, 23);
welding the welding member (21, 22, 23) and the catalyst supporting mechanism (30) together; and
welding an annealed cap (10a) and the annealed vessel body (10) together and annealing locally partially the welded portions between the cap (10a) and the vessel body (10).

2. The method for manufacturing an exhaust gas treatment device according to claim 1, wherein the catalyst supporting mechanism (30) includes:
a first grid (31) having a placement area (31a) on a major surface (S1) of the first grid (31), the placement area (31a) being capable of bearing the catalyst unit (40);
at least one seal plate (32, 34) welded to the major surface (S1) outside the placement area (31a) so as to extend out of the major surface (S1); and
a plurality of column members (33, 35) welded in an upright position on the seal plate (32, 34),
wherein the method comprises welding the first grid (31) and the seal plate (32, 34) to the welding member (21, 22, 23) when welding the welding member (21, 23, 23) and the catalyst supporting mechanism (30).

3. The method for manufacturing an exhaust gas treatment device according to one of claims 1 and 2, wherein the method comprises forming the catalyst supporting mechanism (30) while positioning with one of the catalyst unit (40) and a dummy catalyst (80) identical in shape to the catalyst unit (40).

## Patentansprüche

1. Verfahren zum Herstellen einer Abgasbehandlungsvorrichtung, das umfasst:
Ausbilden eines Katalysatorträger-Mechanismus (30) außerhalb eines Behälterkörpers (10), in dem Abgas strömt, wobei der Katalysatorträger-Mechanismus (30) eine Katalysator-Einheit (40) zum Behandeln von Abgas trägt;
Einbauen des Katalysatorträger-Mechanismus (30) in den geglühten Behälterkörper (10), der ein Schweißelement (21, 22, 23) enthält;
Zusammenschweißen des Schweißelementes (21, 22, 23) und des Katalysatorträger-Mechanismus (30); sowie
Zusammenschweißen einer geglühten Abdeckung (10a) und des geglühten Behälterkörpers (10) sowie teilweises lokales Glühen der verschweißten Abschnitte zwischen der Abdeckung (10a) und dem Behälterkörper (10).

2. Verfahren zum Herstellen einer Abgasbehandlungsvorrichtung nach Anspruch 1, wobei der Katalysatorträger-Mechanismus (30) enthält:
ein erstes Gitter (31) mit einem Aufsetz-Bereich (31a) an einer Hauptfläche (S1) des ersten Gitters (31), wobei der Aufsetz-Bereich (31a) die Katalysator-Einheit (40) tragen kann;
wenigstens eine Dichtungsplatte (32, 34), die an der Hauptfläche (S1) außerhalb des Aufsetz-Bereiches (31a) so angeschweißt ist, dass sie sich aus der Hauptfläche (S1) heraus erstreckt; und
eine Vielzahl von Säulenelementen (33, 35), die in einer aufrechtstehenden Position an der Dichtungsplatte (32, 34) angeschweißt sind,
wobei das Verfahren Anschweißen des ersten Gitters (31) und der Dichtungsplatte (32, 34) an dem Schweißelement (21, 22, 23) beim Verschweißen des Schweißelementes (21, 23, 23) und des Katalysatorträger-Mechanismus (30) umfasst.

3. Verfahren zum Herstellen einer Abgasbehandlungsvorrichtung nach einem der Ansprüche 1 und 2, wobei das Verfahren umfasst, dass der Katalysatorträger-Mechanismus (30) beim Ausbilden mit der Katalysator-Einheit (40) oder einem Dummy-Katalysator (80) positioniert wird, der hinsichtlich der Form identisch mit der Katalysator-Einheit (40) ist.

## Revendications

1. Procédé de fabrication d'un dispositif de traitement de gaz d'échappement comprenant :
la formation d'un mécanisme de support de catalyseur (30) à l'extérieur du corps d'un récipient (10) ou circule un gaz d'échappement, le mécanisme de support de catalyseur (30) supportant une unité de catalyseur (40) destinée à traiter le gaz d'échappement,
l'assemblage du mécanisme de support de catalyseur (30) dans le corps de récipient (10) recuit contenant un élément de soudage (21, 22, 23),
le brasage de l'élément de soudage (21, 22, 23) avec le mécanisme de support de catalyseur (30), et
le brasage d'une coiffe (10a) recuite avec le corps de récipient (10) recuit, et le recuit au moins partiel des parties brasées entre la coiffe (10a) et le corps de récipient (10).

2. Procédé de fabrication d'un dispositif de traitement de gaz d'échappement selon la revendication 1, dans lequel le mécanisme de support de catalyseur (30) inclut :
une première grille (31) possédant une zone de placement (31a) sur la surface principale (S1) de la première grille (31), la zone de placement (31a) pouvant supporter l'unité de catalyseur (40),
au moins une plaque d'étanchéité (32, 34) brasée sur la surface principale (S1) à l'extérieur de la zone de placement (31a) de sorte à s'étendre en dehors de la surface principale (S1), et
une pluralité d'éléments de colonnes (33, 35) brasés en position droite sur la plaque d'étanchéité (32, 34),
où le procédé comprend le brasage de la première grille (31) et de la plaque d'étanchéité (32, 34) sur l'élément de soudage (21, 22, 23) lors du brasage de l'élément de soudage (21, 22, 23) et du mécanisme de support de catalyseur (30).

3. Procédé de fabrication d'un dispositif de traitement de gaz d'échappement selon l'une des revendications 1 et 2, où le procédé comprend la formation du mécanisme de support de catalyseur (30) tout en le positionnant avec l'un parmi l'unité de catalyseur (40) et un catalyseur factice (80) de forme identique à celle de l'unité de catalyseur (40).
